# EUROPEAN PATENT APPLICATION

(11) **EP 4 620 908 A1**
(43) Date of publication of application: **24.09.2025**
(21) Application number: 23777921.0
(22) Date of filing: 21.03.2023
(51) Int. Cl.: C01B 25/45, H01M 4/36, H01M 4/58, H01M 4/62, H01M 4/136, H01M 10/0525

(54) **MODIFIED LITHIUM MANGANESE IRON PHOSPHATE POSITIVE ELECTRODE MATERIAL, AND PREPARATION METHOD AND APPLICATION THEREOF**

(30) Priority: 14.12.2022 CN 202211611236
(71) Applicant: Eve Power Co., Ltd., Jingmen, Hubei 448000 (CN)
(72) Inventor: WEN, Shengyao, Jingmen, Hubei 448000 (CN); ZHANG, Lin, Jingmen, Hubei 448000 (CN); YUAN, Dingding, Jingmen, Hubei 448000 (CN)
(74) Representative: Cabinet Beaumont
(86) International application number: PCT/CN2023/082780
(87) International publication number: WO 2023/185548

(57) **Abstract**

The application provides a modified lithium manganese iron phosphate positive electrode material, and a preparation method and application thereof. The preparation method comprises the following steps: (1) mixing a manganese source, an iron source and a doped metal source with a solvent to obtain solution A; (2) adding a phosphorus source, an ammonia source and hydrogen peroxide to solution A to obtain solution B; (3) mixing solution B and a lithium source for grinding, and carrying out heat treatment to obtain a lithium manganese iron phosphate powder; (4) mixing the lithium source and an M source with a solvent to obtain a fast ion conductor solution, mixing the fast ion conductor solution and the lithium manganese iron phosphate powder, grinding, and sintering to obtain the modified lithium manganese iron phosphate positive electrode material. The application provides a preparation method for an LMFP positive electrode material with dual modification treatment of ion doping and fast ion conductor coating, and the rate capability and the cycle performance of the LMFP electrode material are synergistically improved.

## Description

This application claims priority to Chinese Patent Application No. 202211611236.X filed with CNIPA on December 14, 2022, the disclosure of which is incorporated herein by reference in its entirety.

### TECHNICAL FIELD

The present application belongs to the field of lithium-ion batteries, and relates to a modified lithium manganese iron phosphate cathode material, and a preparation method therefor and use thereof.

### BACKGROUND

In recent years, "carbon neutrality" has attracted the attention all around the world, and the vigorous development of new energy vehicles has driven the rapid growth of demands for lithium-ion power batteries. At present, the cathode materials of lithium-ion power batteries mainly include lithium iron phosphate (LFP) and ternary materials, wherein LFP has gradually become the preferred choice of energy storage and power battery companies due to its advantages of high cost performance, high safety and small resource bottleneck. However, LFP has the problem of low energy density, which has become a key factor restricting the large-scale application of lithium iron phosphate.

Lithium manganese iron phosphate (LMFP) is a cathode material obtained by adding manganese element on the basis of LFP, and the doping of manganese can lead to a higher voltage platform of LMFP (4.1 V vs 3.4 V), and the energy density of the battery can be increased by about 15%, which makes LMFP a cathode material with great application prospects. At present, LMFP cathode material is still in the early stage of industrialization, and the main reason is the low electronic conductivity, low ion diffusion rate, low initial Coulombic efficiency and poor cycling performance of LMFP, which seriously affect its commercialization process. Therefore, how to improve the electronic conductivity, ion transport rate and cycling stability of LMFP material is the key of the technology. At present, the effective way to solve this technical problem is to subject the LMFP material to lattice doping and coating treatment.

CN109244424A discloses a preparation method for a alumina-coated manganese-doped lithium iron phosphate cathode material, wherein a manganese-doped lithium iron phosphate cathode material is obtained through a hydrothermal reaction, then organic solution of ethanol and an aluminum sulfate solution are added in sequence to the powder and stirred for mixing, and the mixture is calcined at high temperature to obtain the alumina-coated manganese-doped lithium iron phosphate cathode material. The alumina-coated manganese-doped lithium iron phosphate cathode material prepared by this method can effectively improve the conductivity and charge-discharge capacity of the material, but the capacity retention rate of the cathode material prepared by this method is only 94.5% after 500 cycles, which cannot meet the demands of power batteries.

CN113942990A discloses a carbon-coated and ion-doped lithium manganese iron phosphate cathode material prepared by co-precipitation reaction; the method overcomes the problems of uneven element distribution, low compaction density and low specific capacity of lithium manganese iron phosphate cathode material, but the ionic conductivity of the material is low and the cycle stability is poor, and the capacity of the assembled button battery is attenuated to 95.8% after 80 cycles at 1 C rate.

### SUMMARY

The following is a summary of subject matter that is described in detail herein. This summary is not intended to be limiting as to the scope of the claims.

An object of the present application is to provide a modified lithium manganese iron phosphate cathode material, and a preparation method therefor and use thereof; the present application provides a preparation method for a LMFP cathode material dual-modified by ion-doping and fast ionic conductor coating, and the rate performance and cycling performance of the LMFP electrode material are synergistically improved.

To achieve the object of the present application, the following technical solutions are adopted in the present application.

In a first aspect, an embodiment of the present application provides a preparation method for a modified lithium manganese iron phosphate cathode material, and the preparation method includes the following steps:
(1) mixing a manganese source, an iron source, and a doping metal source with a solvent to obtain a solution A;
(2) adding a phosphorus source, an amino source, and hydrogen peroxide to the solution A to obtain a solution B;
(3) mixing and grinding the solution B and a lithium source, and subjecting the mixture to heat treatment to obtain lithium manganese iron phosphate powder; and
(4) mixing a lithium source and an M source with a solvent to obtain a solution of a fast ionic conductor, and mixing and grinding the solution of the fast ionic conductor and the lithium manganese iron phosphate powder, and subjecting the mixture to sintering treatment to obtain the modified lithium manganese iron phosphate cathode material;
wherein the M source includes any one or a combination of at least two of salts or oxides of vanadium, aluminum, zirconium, titanium and magnesium.

The lithium manganese iron phosphate cathode material obtained by the method in an embodiment of the present application is a LMFP cathode material dual-modified by ion-doping and fast ionic conductor coating; in this preparation method, the doped manganese iron precursor is synthesized firstly, and thereby, the manganese and iron are mixed uniformly, avoiding negative influence on the electrical performance brought by enrichment and phase separation of manganese and iron, and the doping element is introduced to the metal site, improving the conductivity of the host material.

In one embodiment of the present application, the manganese iron precursor is synthesized firstly, and then doped with metal and mixed with lithium source to synthesize LMFP, and finally, the LMFP is coated with the fast ionic conductor on the surface through ball milling, and a sintering treatment is carried out to obtain the LMFP cathode material dual-modified by ion-doping and fast ionic conductor coating. The prepared lithium oxide coating has good uniformity, consistency and conductivity, and the preparation process of this method is simple and controllable, and has a promising application prospect for large-scale industrial production.

In one embodiment, the manganese source in step (1) includes any one or a combination of at least two of manganese sulfate, manganese carbonate, manganese nitrate, manganese acetate or manganese oxalate.

In one embodiment, the iron source includes iron phosphate and/or iron powder.

In one embodiment, the doping metal source includes any one or a combination of at least two of oxides, hydroxides, chlorides, sulfates, nitrates, acetates, or acetates of magnesium, calcium, aluminum, cobalt, nickel, zinc, molybdenum, titanium, tungsten, vanadmina, chromium, antimony, neodymium, or niobium.

In one embodiment, the solvent includes deionized water.

In one embodiment, the phosphorus source in step (2) includes phosphoric acid and/or ammonium dihydrogen phosphate.

In one embodiment, the amino source includes any one or a combination of at least two of aqueous ammonia, diammonium hydrogen phosphate, ammonium dihydrogen phosphate, ammonium sulfate or urea.

In one embodiment, the lithium source in step (3) includes lithium carbonate and/or lithium dihydrogen phosphate.

In one embodiment, the heat treatment is performed at a temperature of 300-500°C, for example, 300°C, 350°C, 400°C, 450°C, or 500°C.

In one embodiment, the heat treatment is performed for a period of 3-10 h, for example, 3 h, 5 h, 6 h, 8 h or 10 h.

In one embodiment, a Mn/Fe ratio in the lithium manganese iron phosphate is 0.9-0.1, for example, 0.9, 0.8, 0.7, 0.6, 0.5, 0.4, 0.3, 0.2, or 0.1, and preferably 0.6.

In one embodiment, the fast ionic conductor and the lithium manganese iron phosphate powder in step (4) have a mass ratio of 0.1-10:100, for example, 0.1:100, 0.5:100, 1:100, 2:100, 5:100, or 10:100, and preferably 1-5:100.

In one embodiment, a manner of the grinding includes ball milling.

In one embodiment, the ball milling is performed at a speed of 500-1500 r/min, for example, 500 r/min, 800 r/min, 1000 r/min, 1200 r/min, or 1500 r/min.

In one embodiment, the ball milling is performed for a period of 0.5-5 h, for example, 0.5 h, 1 h, 2 h, 3 h, or 5 h.

In one embodiment, the sintering treatment in step (4) is performed at a temperature of 200-600°C, for example, 200°C, 300°C, 400°C, 500°C, or 600°C.

In one embodiment, the sintering treatment is performed for a period of 2-15 h, for example, 2 h, 5 h, 8 h, 10 h, or 15 h.

In a second aspect, an embodiment of the present application provides a modified lithium manganese iron phosphate cathode material, and the modified lithium manganese iron phosphate cathode material is prepared by the method as described in the first aspect.

In one embodiment, the modified lithium manganese iron phosphate cathode material includes an ion-doped core and a fast ionic conductor coating disposed on the surface of the ion-doped core.

In one embodiment of the present application, the fast ionic conductor is coated on the LMFP on the surface; on one hand, the coating can be used as a protective layer to inhibit the dissolution of manganese and inhibit the HF erosion to the cathode material, thereby improving the cyclic stability of the material; on the other hand, the coating can also be used as a fast lithium-ion conductor to enhance the ionic conductivity of the material, reduce the charge transfer resistance of the battery during charging-discharging process, effectively improve the impedance and charge of interface between the electrolyte and the cathode material, and improve the rate performance. In addition, the coating can supplement the lithium ions which are consumed in the formation of SEI film, improving the initial Coulombic efficiency of the material.

In one embodiment, the fast ionic conductor coating has a thickness of 10-50 nm, for example, 10 nm, 20 nm, 30 nm, 40 nm, or 50 nm, and preferably 20-30 nm.

In one embodiment, the modified lithium manganese iron phosphate cathode material has a median particle size D50 of 0.5-5 µm, for example, 0.5 µm, 1 µm, 2 µm, 3 µm, 4 µm, or 5µm.

In a third aspect, an embodiment of the present application provides a positive electrode plate, and the positive electrode plate includes the modified lithium manganese iron phosphate cathode material as described in the second aspect.

In a fourth aspect, an embodiment of the present application provides a lithium-ion battery, and the lithium-ion battery includes the positive electrode plate as described in the third aspect.

Compared with the prior art, the present application has the following beneficial effects.
(1) The preparation method in the present application synthesizes the doped manganese iron precursor firstly, which can not only mix the manganese and iron evenly, avoiding negative influence on the electrical performance brought by enrichment and phase separation of manganese and iron, but also introduce the doping element to the metal sites, improving the conductivity of the host material.
(2) In the present application, the fast ionic conductor is coated on the LMFP on the surface; on one hand, the coating can be used as a protective layer to inhibit the dissolution of manganese and inhibit the HF erosion to the cathode material, thereby improving the cyclic stability of the material; on the other hand, the coating can also be used as a fast lithium-ion conductor to enhance the ionic conductivity of the material, reduce the charge transfer resistance of the battery during charging-discharging process, effectively improve the impedance and charge of interface between the electrolyte and the cathode material, and improve the rate performance. In addition, the coating can supplement the lithium ions which are consumed in the formation of SEI film, improving the initial Coulombic efficiency of the material.
(3) In the present application, although there are many advantages of coating a fast ionic conductor on the surface of LMFP material, the main function of the fast ionic conductor is to enhance the conduction of lithium ions; adding the fast ionic conductor excessively will decrease the amount of the main component, and in turn reduce the gram capacity of the LMFP material; adding the fast ionic conductor insufficiently cannot provide a significant effect.

Other aspects will be appreciated upon reading and understanding the detailed description.

### DETAILED DESCRIPTION

### Example 1

This example provides a modified lithium manganese iron phosphate cathode material, and the preparation method for the modified lithium manganese iron phosphate cathode material includes the following steps:
(1) manganese carbonate and iron powder with a molar ratio of Mn:Fe = 0.6:0.4 were mixed with dilute hydrochloric acid, and added with nickel sulfate which was 1% of the total mass of manganese sulfate and iron powder to give a solution A;
(2) phosphoric acid was added to the solution A according to the molar ratio of Mn:Fe:PO₄ of 0.6:0.4: 1, and then hydrogen peroxide and aqueous ammonia were added in sequence to give a solution B;
(3) the solution B and lithium carbonate (Li: PO₄ = 1:0.95) were mixed and ground, and the mixture was subjected to heat treatment at 300°C for 6 h to give lithium manganese iron phosphate powder, and the chemical formula of the powder was LiMn_{0.6}Fe_{0.4}PO₄; and
(4) lithium carbonate and niobium oxide were mixed with deionized water to obtain a slurry of the fast ionic conductor; the slurry of the fast ionic conductor was mixed with the lithium manganese iron phosphate powder and subjected to ball milling at 600 rpm for 2 h, wherein the mass ratio of the fast ionic conductor to the lithium manganese iron phosphate powder was 1:100; the grinding product was sintered at 500°C for 3 h in a nitrogen atmosphere, and then cooled to room temperature in a nitrogen atmosphere to give the modified lithium manganese iron phosphate cathode material;
the thickness of the coating of the modified lithium manganese iron phosphate cathode material was 15 nm, and the median particle size D50 of the modified lithium manganese iron phosphate cathode material was 1.2 µm.

### Example 2

This example provides a modified lithium manganese iron phosphate cathode material, and the preparation method for the modified lithium manganese iron phosphate cathode material includes the following steps:
(1) manganese carbonate and iron powder with a molar ratio of Mn:Fe = 0.6:0.4 were mixed with deionized water, and added with magnesium sulfate which was 1.2% of the total mass of manganese sulfate and iron powder to give a solution A;
(2) phosphoric acid was added to the solution A according to the molar ratio of Mn:Fe:PO₄ of 0.6:0.4:1, and then hydrogen peroxide and aqueous ammonia were added in sequence to give a solution B;
(3) the solution B and lithium carbonate (Li: PO₄ = 1:0.95) were mixed and ground, and the mixture was subjected to heat treatment at 400°C for 4 h to give lithium manganese iron phosphate powder, and the chemical formula of the powder was LiMn_{0.6}Fe_{0.4}PO₄; and
(4) lithium carbonate and niobium oxide were mixed with deionized water to obtain a solution of the fast ionic conductor; the solution of the fast ionic conductor was mixed with the lithium manganese iron phosphate powder and subjected to ball milling at 700 rpm for 2 h, wherein the mass ratio of the fast ionic conductor to the lithium manganese iron phosphate powder was 2:100; the grinding product was sintered at 400°C for 5 h in a nitrogen atmosphere, and then cooled to room temperature in a nitrogen atmosphere to give the modified lithium manganese iron phosphate cathode material;
the thickness of the coating of the modified lithium manganese iron phosphate cathode material was 18 nm, and the median particle size D50 of the modified lithium manganese iron phosphate cathode material was 1.5 µm.

### Example 3

This example differs from Example 1 only in that the mass ratio of the added fast ionic conductor to the lithium manganese iron phosphate was controlled to 0.5:100, and the thickness of the coating of the prepared modified lithium manganese iron phosphate cathode material was 5 nm. Other conditions and parameters were exactly the same as those of Example 1.

### Example 4

This example differs from Example 1 only in that the mass ratio of the added fast ionic conductor to the lithium manganese iron phosphate was 8:100, and the thickness of the coating of the prepared modified lithium manganese iron phosphate cathode material was 60 nm. Other conditions and parameters were exactly the same as those of Example 1.

### Comparative Example 1

This comparative example differs from Example 1 only in that there was no fast ionic conductor coating. Other conditions and parameters were exactly the same as those of Example 1.

### Comparative Example 2

This comparative example differs from Example 1 only in that the fast ionic conductor was replaced with aluminum oxide. Other conditions and parameters were exactly the same as those of Example 1.

### Comparative Example 3

This comparative example differs from Example 1 only in that the manganese source, iron source, phosphorus source, and doping metal source were directly mixed to prepare a precursor. Other conditions and parameters were exactly the same as those of Example 1.

### Performance tests

The modified lithium manganese iron phosphate cathode materials prepared by Examples 1-4 and Comparative Examples 1-3 were used as the cathode material, a graphite carbon material was selected as the anode material, and a PE/PP polymer material was used as the separator; the cathode material, anode material, and separator were assembled into a core through winding or stacking, and encapsulated in an aluminum shell or an aluminum-plastic film, a lithium-ion electrolyte composed of EC/EMC or other organic solvents and LiPF₆ was injected, and a pouch lithium-ion battery was assembled. The batteries were subjected to electrical performance test and the test result is shown in Table 1.

**Table 1**

| | Initial Coulombic efficiency (%) | Discharging at 3C rate (%) | Capacity retention rate after 1000 cycles at 1C-1C and 25°C |
|---|---|---|---|
| Example 1 | 95.8 | 94.7 | 95.2 |
| Example 2 | 96.0 | 96.5 | 93.7 |
| Example 3 | 92.1 | 90.6 | 91.1 |
| Example 4 | 94.3 | 97.0 | 90.8 |
| Comparative Example 1 | 83.3 | 80.4 | 86.5 |
| Comparative Example 2 | 87.6 | 84.1 | 85.5 |
| Comparative Example 3 | 85.2 | 85.1 | 88.8 |

From Examples 1 and 2 in Table 1, it can be seen that the doping of metal element and the coating of the fast ionic conductor are beneficial to the improvement of Coulombic efficiency and rate discharge performance of the material, and improve the cycle retention rate simultaneously. However, an overly high coating amount of the fast ionic conductor, which though is beneficial to the rate performance, will reduce the initial Coulombic efficiency and cycling.

From the comparison of Example 1 and Examples 3 and 4, it can be seen that in the preparation process of the modified lithium manganese iron phosphate cathode material in the present application, the additive amount of the fast ionic conductor will affect the thickness of the fast ionic conductor coating of the prepared cathode material, and in turn affect the performance of the modified lithium manganese iron phosphate cathode material; by controlling the mass ratio of the fast ionic conductor to lithium manganese iron phosphate powder to 1-5%, the prepared modified lithium manganese iron phosphate cathode material has better performance; if the additive amount of the fast ionic conductor is overly large, the active ingredient will be less and the gram capacity will be low, and if the additive amount of the fast ionic conductor is overly small, the effect will not be obvious.

From the comparison of Example 1 and Comparative Examples 1 and 2, it can be seen that in the present application, the fast ionic conductor is coated on the LMFP on the surface; on one hand, the coating can be used as a protective layer to inhibit the dissolution of manganese and inhibit the HF erosion to the cathode material, thereby improving the cyclic stability of the material; on the other hand, the coating can also be used as a fast lithium-ion conductor to enhance the ionic conductivity of the material, reduce the charge transfer resistance of the battery during charging-discharging process, effectively the impedance and charge of interface between the electrolyte and the cathode material, and improve the rate performance. In addition, the coating can supplement the lithium ions which are consumed in the formation of SEI film, improving the initial Coulombic efficiency of the material.

From the comparison of Example 1 and Comparative Example 3, it can be seen that in the present application, the doped manganese iron precursor is synthesized firstly, and thereby, the manganese and iron are mixed uniformly, avoiding negative influence on the electrical performance brought by enrichment and phase separation of manganese and iron, and the doping element is introduced to the metal site, improving the conductivity of the host material.

## Claims

1. A preparation method for a modified lithium manganese iron phosphate cathode material, which comprises the following steps:
(1) mixing a manganese source, an iron source, and a doping metal source with a solvent to obtain a solution A;
(2) adding a phosphorus source, an amino source, and hydrogen peroxide to the solution A to obtain a solution B;
(3) mixing and grinding the solution B and a lithium source, and subjecting the mixture to heat treatment to obtain lithium manganese iron phosphate powder; and
(4) mixing a lithium source and an M source with a solvent to obtain a solution of a fast ionic conductor, and mixing and grinding the solution of the fast ionic conductor and the lithium manganese iron phosphate powder, and subjecting the mixture to sintering treatment to obtain the modified lithium manganese iron phosphate cathode material;
wherein the M source comprises any one or a combination of at least two of salts or oxides of vanadium, aluminum, zirconium, and titanium.

2. The preparation method according to claim 1, wherein the manganese source in step (1) comprises any one or a combination of at least two of manganese sulfate, manganese carbonate, manganese nitrate, manganese acetate, or manganese oxalate;
optionally, the iron source comprises iron phosphate and/or iron powder;
optionally, the doping metal source comprises any one or a combination of at least two of oxides, hydroxides, chlorides, sulfates, nitrates, acetates, or acetates of magnesium, calcium, aluminum, cobalt, nickel, zinc, molybdenum, titanium, tungsten, vanadmina, chromium, antimony, neodymium, or niobium;
optionally, the solvent comprises deionized water.

3. The preparation method according to claim 1 or 2, wherein the phosphorus source in step (2) comprises phosphoric acid and/or ammonium dihydrogen phosphate;
optionally, the amino source comprises any one or a combination of at least two of aqueous ammonia, diammonium hydrogen phosphate, ammonium dihydrogen phosphate, ammonium sulfate, or urea.

4. The preparation method according to any one of claims 1-3, wherein the lithium source in step (3) comprises lithium carbonate and/or lithium dihydrogen phosphate;
optionally, the heat treatment is performed at a temperature of 300-500°C;
optionally, the heat treatment is performed for a period of 3-10 h.

5. The preparation method according to any one of claims 1-4, wherein in step (4), the fast ionic conductor and the lithium manganese iron phosphate powder have a mass ratio of 0.1-10: 100, preferably 1-5: 100;
optionally, a manner of the grinding comprises ball milling;
optionally, the ball milling is performed at a speed of 500-1500 r/min;
optionally, the ball milling is performed for a period of 0.5-5 h.

6. The preparation method according to any one of claims 1-5, wherein the sintering treatment in step (4) is performed at a temperature of 200-600°C;
optionally, the sintering treatment is performed for a period of 2-15 h.

7. A modified lithium manganese iron phosphate cathode material, which is prepared by the method according to any one of claims 1-6.

8. The modified lithium manganese iron phosphate cathode material according to claim 7, wherein the modified lithium manganese iron phosphate cathode material comprises an ion-doped core and a fast ionic conductor coating disposed on the surface of the ion-doped core;
optionally, the fast ionic conductor coating has a thickness of 10-50 nm, preferably 20-30 nm;
optionally, the modified lithium manganese iron phosphate cathode material has a median particle size D50 of 0.5-5 µm.

9. A positive electrode plate, which comprises the modified lithium manganese iron phosphate cathode material according to claim 7 or 8.
